# FASCICULE DE BREVET EUROPEEN

(11) **EP 3 350 476 B1**
(45) Date de publication et mention de la délivrance du brevet: **29.07.2020**
(21) Numéro de dépôt: 16775306.0
(22) Date de dépôt: 13.09.2016
(51) Int. Cl.: F16H 1/22, F02C 7/32

(54) **BOITIER D'ENTRAINEMENT D'EQUIPEMENTS DANS UNE TURBOMACHINE**
AUSRÜSTUNGSANTRIEBSGETRIEBE IN EINER TURBOMASCHINE
EQUIPMENT DRIVE GEARBOX IN A TURBOMACHINE

(30) Priorité: 14.09.2015 FR 1558564
(43) Date de publication de la demande: 25.07.2018
(73) Titulaire: Safran Transmission Systems, 92700 Colombes (FR)
(72) Inventeur: GUILLEMONT, Maxence, 77550 Moissy-Cramayel (FR); DREVON, Fanélie, 77550 Moissy-Cramayel (FR); VIEL, Julien, 77550 Moissy-Cramayel (FR)
(74) Mandataire: Ernest Gutmann - Yves Plasseraud S.A.S.
(86) Numéro de dépôt international: PCT/FR2016/052302
(87) Numéro de publication internationale: WO 2017/046505

(56) Documents cités:
- EP-A1- 2 696 057
- WO-A1-2005/054645
- WO-A1-2010/086422
- WO-A1-2014/195632
- WO-A1-2015/052430

## Description

La présente invention se rapporte à des boitiers d'entraînement pour équipements présents dans les turbomachines d'aéronefs.

Dans une turbomachine, différents équipements, tels que notamment des générateurs électriques pour la production de puissance électrique, des pompes pour l'alimentation en pression de carburant ou d'huile, etc., sont entraînés en rotation par un système d'engrenages relié à un arbre de la turbomachine.

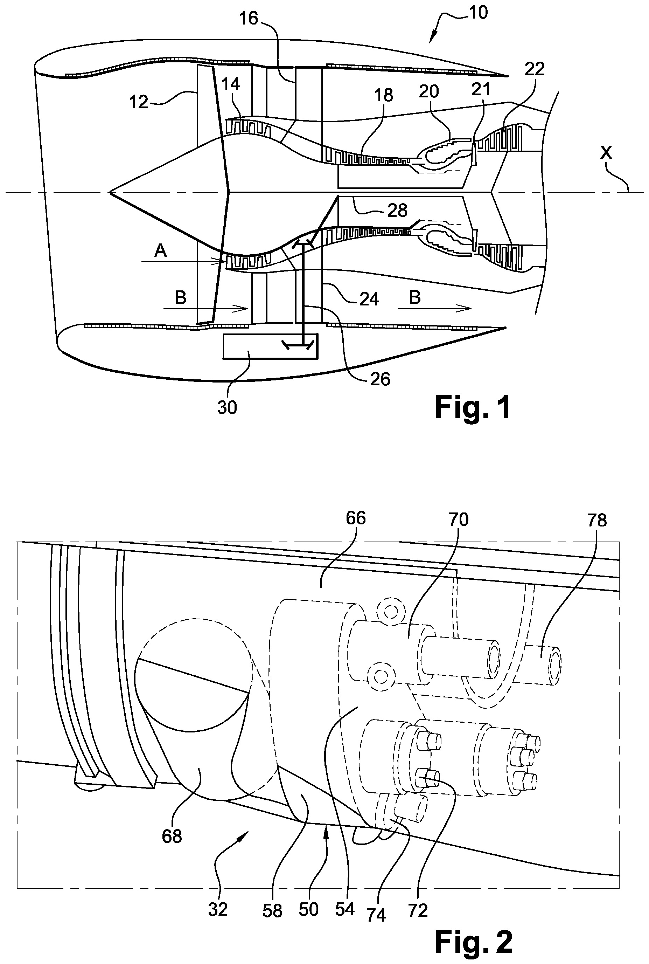

Classiquement, comme représenté en figure 1, une turbomachine comprend d'amont en aval une soufflante 12, un compresseur basse pression 14, un carter intermédiaire 16, un compresseur haute pression 18, une chambre de combustion 20, une turbine haute pression 21 et une turbine basse pression 22. L'air entrant dans la turbomachine se divise en un flux d'air primaire (flèche A) qui circule dans une veine d'air dite primaire à l'intérieur des compresseurs basse et haute pression 14, 18 vers la chambre de combustion 20 puis à travers les turbines haute et basse pression 21, 22, et en un flux d'air secondaire (flèches B) qui circule dans une veine d'air dite secondaire contournant le compresseur 14, 18, la chambre de combustion 20 et la turbine 21, 22. Le carter intermédiaire 16 comprend des bras structuraux 24 s'étendant radialement vers l'extérieur. Un bras 24 du carter intermédiaire 16 contient un arbre 26 de transmission de puissance s'étendant sensiblement radialement et dont l'extrémité interne est entraînée à rotation par l'arbre 28 du compresseur haute pression 18. L'extrémité radialement externe de l'arbre de transmission de puissance 26 est entraînée en rotation avec une extrémité d'un arbre principal d'un boîtier d'entraînement d'équipements 30 de la turbomachine. Le boîtier 30 est classiquement agencé dans une nacelle formant une enceinte périphérique de la turbomachine. Ce boîtier d'entraînement comprend un train d'engrenages comportant une succession de roues dentées cylindriques en prise les unes avec les autres et dont les diamètres sont adaptés de manière à ce que les axes de certaines roues servent de sortie pour l'entraînement d'un équipement à une vitesse donnée. Une telle configuration est particulièrement intéressante puisqu'elle permet de bien adapter la vitesse de rotation avec chaque équipement. Toutefois, ce type de montage s'avère assez volumineux et son installation dans la nacelle impose une augmentation du diamètre de la turbomachine qu'il serait souhaitable de diminuer pour réduire la trainée aérodynamique de la turbomachine.

Ainsi, pour réduire le diamètre de la turbomachine et plus particulièrement l'épaisseur de la nacelle, il a été proposé d'agencer le boîtier d'entraînement d'équipements et les équipements associés dans une zone dite inter-veines. En pratique, cette zone inter-veines se situe axialement au niveau du compresseur haute pression entre les veines primaire et secondaire, c'est-à-dire entre une paroi annulaire interne définissant radialement vers l'extérieur la veine annulaire primaire et une paroi annulaire externe définissant radialement vers l'intérieur la veine annulaire secondaire. Comme on peut le constater sur la figure 1, il convient de limiter l'encombrement radial du boîtier d'entraînement pour que celui-ci n'impacte par les écoulements d'air dans les veines primaire et secondaire. De plus, l'encombrement axial doit être réduit par rapport à un boîtier d'entraînement comme décrit précédemment pour éviter que celle-ci ne s'étende trop vers l'aval et soit impactée par le rayonnement thermique de la chambre de combustion. Enfin, l'encombrement circonférentiel du boîtier d'entraînement doit aussi être réduit par rapport à un positionnement dans la nacelle puisque l'espace inter-veines est déjà utilisé pour faire passer diverses conduites et éléments de la turbomachine et que le diamètre à cet endroit est également moins important qu'au niveau de la nacelle.

A cette fin, il a été proposé de remplacer le train d'engrenages à roues cylindriques par des pignons coniques portés par l'arbre principal, chaque pignon conique entraînant en rotation deux équipements agencés de manière symétrique par rapport à un plan contenant l'axe de l'arbre principal. De cette manière, les équipements sont répartis le long de l'arbre principal et entraînés par celui-ci. Si ce type de montage permet de réduire l'encombrement du boîtier d'entraînement, il pose toutefois plusieurs difficultés. En effet, chaque pignon conique entraîne deux équipements ce qui impose une même vitesse de rotation pour lesdits deux équipements, ce qui ne permet pas d'avoir une vitesse optimale d'entraînement pour chaque équipement. De plus, la réalisation de pignons coniques s'avère difficile. Enfin, un tel boîtier d'entraînement s'étend globalement axialement et est fixé par des points de fixation espacés axialement les uns des autres. Il s'ensuit qu'un tel boîtier d'entraînement est plus facilement sujet à des déplacements latéraux.

L'invention a notamment pour but d'apporter une solution simple, efficace et économique aux problèmes de l'art antérieur décrit précédemment.

A cet effet, le présent document propose un boîtier d'entraînement pour équipements de turbomachine comprenant un arbre principal destiné à être relié en rotation à un arbre de transmission de puissance d'une turbomachine, l'arbre principal comprenant au moins un pignon conique entraînant en rotation au moins un équipement, caractérisé en ce qu'il comprend un train d'engrenages à roues dentées cylindriques comprenant une entrée reliée à entraînement en rotation à l'arbre principal et comportant une pluralité de sorties destinées chacune à entraîner un équipement, le train d'engrenages s'étendant suivant un secteur angulaire et les sorties étant espacées angulairement les unes des autres le long du secteur angulaire.

Le boîtier d'entraînement comprend à la fois au moins un pignon conique qui est apte à entraîner par exemple deux équipements susceptibles de tourner à la même vitesse, tels que par exemple des générateurs électriques et un train d'engrenages à roues dentées cylindriques par exemple à dentures droites ou hélicoïdales pouvant entraîner notamment un déshuileur et une pompe, pouvant chacun tourner à une vitesse distincte.

L'utilisation d'un train d'engrenages s'étendant circonférentiellement permet d'espacer les sorties de celui-ci en direction circonférentielle autour de l'axe d'une turbomachine et ainsi de réduire l'encombrement axial du boîtier d'engrenages. L'intégration d'un train d'engrenages comprenant uniquement des roues dentées cylindriques permet de simplifier la conception du boîtier d'entraînement.

Le boîtier d'entraînement proposé combine ainsi les avantages d'un boîtier d'entraînement classique comportant uniquement des roues cylindriques et d'un boîtier d'entraînement uniquement à pignons coniques tout en éliminant les inconvénients respectifs de chacun de ces boîtiers d'entraînement.

Selon une autre caractéristique du présent document, le boîtier d'entraînement comprend des moyens d'accrochage du train d'engrenages à un carter d'une turbomachine, agencés au voisinage des extrémités circonférentielles du train d'engrenages. Cette fixation permet de supprimer les mouvements latéraux du boîtier comme dans la technique antérieure avec un boîtier à pignons coniques.

Selon encore une autre caractéristique, ledit au moins un pignon conique est agencé sur l'arbre principal entre une extrémité reliée à l'entrée du train d'engrenages et une extrémité opposée portant des moyens de liaison à rotation à un arbre de transmission de puissance.

Les sorties du boîtier d'engrenages peuvent s'étendre axialement, c'est-à-dire sans composante radiale ou circonférentielle, et depuis une face du boîtier d'engrenages opposée à celle faisant face à l'au moins un pignon conique.

Cette configuration s'avère particulièrement intéressante puisqu'elle permet d'agencer les équipements comportant des conduites de passage de fluide à une extrémité de l'arbre principal, ce qui simplifie l'intégration du boîtier dans la turbomachine et en particulier dans un espace inter-veines de la turbomachine.

Dans une configuration particulière de l'invention, le train d'engrenages s'étend circonférentiellement sur une distance angulaire comprise entre 45 ° et 180°, de préférence sur environ 150°.

Le pignon conique peut par exemple être relié en rotation à au moins deux équipements agencés de manière symétrique l'un par rapport à l'autre par rapport à un plan contenant l'axe de l'arbre principal. Les équipements peuvent être des générateurs électriques.

De préférence, le boîtier d'entraînement selon l'invention comprend un seul pignon conique permettant l'entraînement de deux générateurs électriques pouvant tourner à la même vitesse de rotation, les autres équipements étant entraînés en rotation par les sorties du train d'engrenages à roues dentées cylindriques.

La présente divulgation concerne encore une turbomachine comprenant un boîtier d'entraînement du type décrit ci-dessus. L'arbre principal peut s'étendre dans un plan contenant l'axe de la turbomachine et le train d'engrenages peut être conformé de manière à ce que les sorties s'étendent angulairement autour de l'axe de la turbomachine.

Le boîtier d'entraînement est de préférence agencé radialement dans un espace annulaire séparant une veine annulaire primaire d'air d'une veine annulaire secondaire d'air, et axialement au niveau du compresseur haute pression, le boîtier étant agencé de manière à ce que le bloc d'engrenages soit agencé en aval dudit au moins un premier pignon conique.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- la figure 1 est une vue schématique en coupe d'une turbomachine selon la technique antérieure ;
- la figure 2 est une vue schématique d'un boîtier d'entraînement selon le présent document agencée dans un espace inter-veines ;
- la figure 3 est une représentation schématique de la chaine cinématique d'un boîtier d'entraînement selon le présent document ;
- la figure 4 est une vue schématique en perspective et de côté du boîtier d'entraînement ;
- la figure 5 est une vue schématique en perspective et depuis l'aval du boîtier d'entraînement de la figure 4 ;
- la figure 6 est une vue schématique depuis l'aval du boîtier d'entraînement de la figure 4.

La figure 2 représente un boîtier d'entraînement 32 selon le présent document agencée dans un espace inter-veines défini entre les veines d'écoulement des flux d'air primaire et secondaire d'une turbomachine.

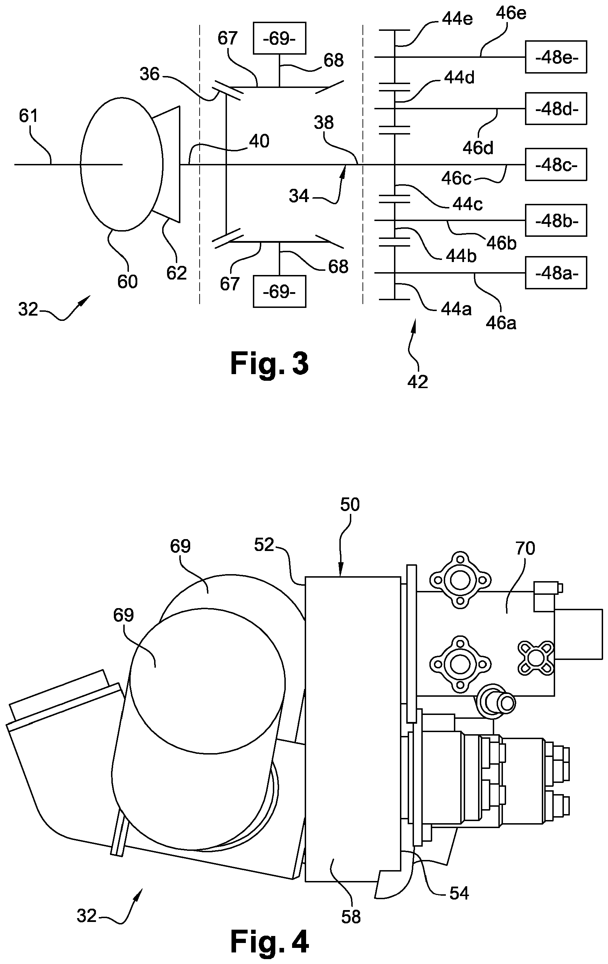

La figure 3 représente plus spécifiquement le boîtier d'entraînement 32 selon le présent document, laquelle comprend un arbre principal 34 portant un pignon conique 36 agencé entre une première extrémité 38 et une seconde extrémité 40 de l'arbre principal 34. La première extrémité 38 de l'arbre principal 34 est reliée à l'entrée d'un train d'engrenages 42 à roues dentées cylindriques 44a, 44b, 44c, 44d, 44e telles que des roues dentées à dentures droites ou hélicoïdales. Les roues dentées 44a, 44b, 44c, 44d, 44e dont certaines comprennent une sortie 46a, 46b, 46c, 46d, 46e formée par un axe central de la roue dentée 44a, 44b, 44c, 44d, 44e qui entraîne en rotation un équipement donné 48a, 48b, 48c, 48d, 48e. Le train d'engrenages 42 est monté dans une enveloppe rigide 50 formant une enveloppe externe ou un carénage externe.

Selon le présent document, le train d'engrenages 42 et son enveloppe externe 50 s'étendent suivant un secteur angulaire, c'est-à-dire suivant un arc. Les sorties 46 sont espacées angulairement les unes des autres le long du secteur angulaire. Dans la réalisation selon l'invention, l'arc est plus particulièrement un arc de cercle dont le centre est situé sur l'axe X de la turbomachine (figure 1). Le train d'engrenages 42 s'étend ainsi circonférentiellement autour de l'axe X de la turbomachine et les sorties 46a, 46b, 46c, 46d, 46e du train d'engrenages des équipements 48a, 48b, 48c, 48d, 48e sont espacés circonférentiellement les unes des autres autour de l'axe X de la turbomachine, ce qui permet de répartir circonférentiellement les équipements 48a, 48b, 48c, 48d, 48e autour du compresseur haute pression. L'enveloppe ou carénage externe 50 comprend une paroi amont 52 et une paroi aval 54 sensiblement parallèles l'une à l'autre et sensiblement perpendiculaires à l'axe X de la turbomachine. Les bords des parois amont et aval sont reliés par deux parois radialement incurvées interne 56 et externe 58 s'étendant circonférentiellement. La paroi interne 56 présente une face radialement interne qui est incurvée concave et la paroi externe 58 présente une face radialement externe qui est incurvée convexe. Les sorties 46 du train d'engrenages 42 s'étendent vers l'aval par rapport au train d'engrenages 42 et traversent la paroi aval 54 de l'enveloppe externe 50.

La seconde extrémité 40 de l'arbre principal 34 est reliée à des moyens de liaisons à un arbre de transmission de puissance relié à entraînement en rotation à l'arbre du compresseur haute pression, comme cela est bien connu de l'homme du métier. Ces moyens de liaisons comprennent un arbre de transfert 61 relié par un couple de pignons coniques 60, 62 à l'extrémité 40 de l'arbre principal 34 (figure 3), l'extrémité de l'arbre de transfert 61 opposée à celle reliée à ladite seconde extrémité 40 de l'arbre principal 34 étant reliée par un autre couple de pignons coniques à l'arbre de transmission de puissance. L'utilisation d'un arbre de transfert 61, intercalé dans la chaîne cinématique entre l'arbre de transmission de puissance et l'arbre principal 34, permet une bonne adaptation géométrique du boîtier d'entraînement 32 à son environnement.

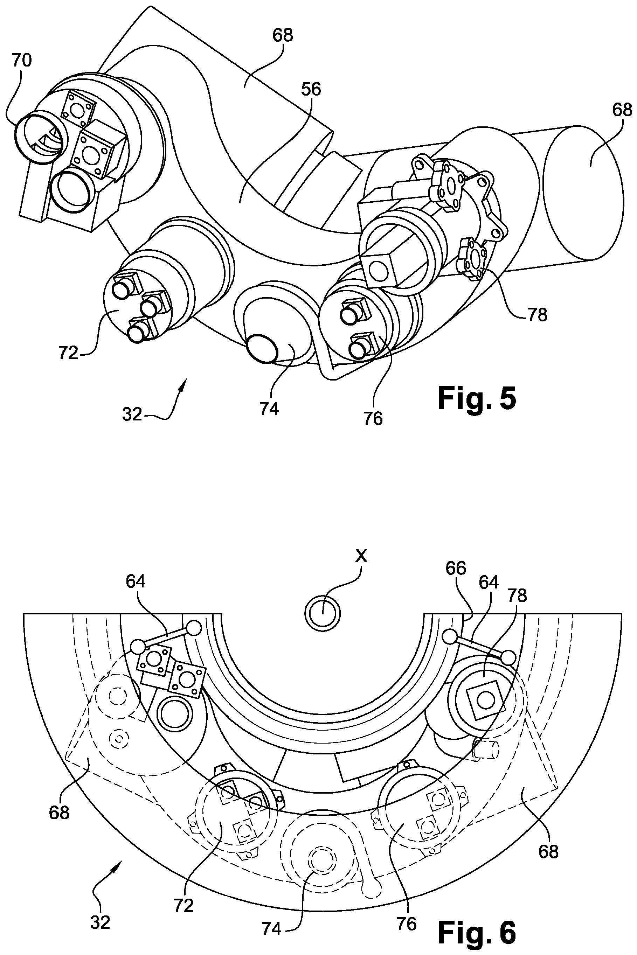

Comme représenté en figure 6, les extrémités angulaires du train d'engrenages 42 comprennent des moyens d'accrochage 64 sur la paroi 66 définissant radialement vers l'extérieur la veine d'écoulement du flux d'air primaire. Ces moyens d'accrochage 64 sont portés par le carénage externe 50 du train d'engrenages 42 et sont par exemple du type biellettes, bielles ou étriers.

Dans les réalisations possibles de l'invention, le train d'engrenages 42 s'étend sur une distance angulaire comprise entre 45° et 180°. Dans la réalisation pratique représentée sur les figures, le train d'engrenages 42 s'étend sur une distance angulaire de 150° environ.

Dans un exemple de réalisation de l'invention, le pignon conique 36 de l'arbre principal engrène avec deux pignons coniques 67 comportant chacun une sortie 68 entraînant en rotation un équipements 69. Les deux équipements 69 sont agencés de manière symétrique l'un par rapport à l'autre et par rapport à un plan contenant l'axe de l'arbre principal 34. Ces deux équipements sont par exemple des générateurs démarreurs électriques servant à démarrer la turbomachine et, en vol, à la fourniture d'électricité à des équipements de loisirs à l'intérieur de l'avion. L'utilisation de pignons coniques permet ainsi l'installation des équipements volumineux dans l'espace inter-veine.

Dans un exemple de réalisation de l'invention, le train d'engrenages comprend cinq sorties 46a, 46b, 46c, 46d, 46e dont la première est reliée à un groupe de lubrification 70 des paliers de roulement de la turbomachine et des paliers du boîtier d'entraînement. La seconde sortie est reliée à une génératrice à aimants permanents 72 destinée à fournir de l'électricité à des composants électroniques de navigation et de contrôle de l'avion. La troisième sortie est reliée à un déshuileur 74 lui-même relié au groupe de lubrification. La quatrième sortie est reliée à un alternateur à aimants permanents 76 destiné à fournir de l'électricité à des composants électroniques de navigation du moteur, tels que le calculateur connu sous l'acronyme anglais de FADEC (Full Authority Digital Engine Control). La cinquième sortie est reliée à une pompe à carburant 78.

Le boîtier d'entraînement 32 selon le présent document pourrait aussi comprendre plusieurs pignons coniques agencés entre les première et seconde extrémités.

## Revendications

1. Turbomachine comprenant un boîtier d'entraînement (32) pour équipements comprenant un arbre principal (34) relié en rotation à un arbre de transmission de puissance de la turbomachine, l'arbre principal (34) comprenant au moins un pignon conique (36) entraînant en rotation au moins un équipement (69), **caractérisée en ce qu'**il comprend un train d'engrenages (42) à roues dentées cylindriques (44a, 44b, 44c, 44d, 44e) comprenant une entrée reliée à entraînement en rotation à l'arbre principal (34) et comportant une pluralité de sorties (46) destinées chacune à entraîner un équipement (48a, 48b, 48c, 48d, 48e), le train d'engrenages (42) s'étendant suivant un secteur angulaire et les sorties (46a, 46b, 46c, 46d, 46e) étant espacées angulairement, autour de l'axe (X) de la turbomachine, les unes des autres le long du secteur angulaire.

2. Turbomachine selon la revendication 1, **caractérisée en ce qu'**il comprend des moyens d'accrochage du train d'engrenages (42) à un carter de la turbomachine, agencés au voisinage des extrémités circonférentielles du train d'engrenages.

3. Turbomachine selon la revendication 1 ou 2, **caractérisée en ce que** ledit au moins un pignon conique (36) est agencé sur l'arbre entre une extrémité reliée à l'entrée du train d'engrenage (42) et une extrémité opposée portant des moyens de liaison à rotation à l'arbre de transmission de puissance.

4. Turbomachine selon la revendication 3, **caractérisée en ce que** les sorties du boîtier d'engrenages (42) s'étendent axialement et depuis une face du boîtier d'engrenages (42) opposée à celle faisant face à l'au moins un pignon conique (36).

5. Turbomachine selon l'une des revendications 1 à 4, **caractérisée en ce que** le train d'engrenages (42) s'étend circonférentiellement sur une distance angulaire comprise entre 45° et 180°, de préférence sur environ 150°.

6. Turbomachine selon l'une des revendications précédentes, **caractérisée en ce que** ledit au moins un pignon conique (36) est relié à au moins deux équipements (69), agencés de manière symétrique l'un par rapport à l'autre par rapport à un plan contenant l'axe de l'arbre principal (34).

7. Turbomachine selon la revendication 6, **caractérisée en ce que** lesdits équipements sont des générateurs électriques (69).

8. Turbomachine selon l'une des revendications précédentes, **caractérisée en ce qu'**il comprend un seul pignon conique (36).

9. Turbomachine selon l'une des revendications 1 à 8, **caractérisée en ce que** le boîtier d'entraînement (32) est agencé radialement dans un espace annulaire séparant une veine annulaire primaire d'air d'une veine annulaire secondaire d'air, et axialement au niveau du compresseur haute pression, le boîtier étant agencé de manière à ce que le bloc d'engrenages soit agencé en aval dudit au moins un pignon conique (36).

## Patentansprüche

1. Turbotriebwerk mit einem Antriebsgehäuse (32) für Hilfsgeräte, enthaltend eine Hauptwelle (34), die drehbar mit einer Kraftübertragungswelle des Turbotriebwerks verbunden ist,
wobei die Hauptwelle (34) zumindest ein Kegelritzel (36) aufweist, das zumindest ein Hilfsgerät (69) drehend antreibt,
**dadurch gekennzeichnet, dass**
es ein Zahnradgetriebe (42) mit Stirnrädern (44a, 44b, 44c, 44d, 44e) aufweist, das einen Eingang aufweist, der drehfest mit der Hauptwelle (34) verbunden ist und eine Vielzahl von Ausgängen (46) aufweist, die jeweils dazu bestimmt sind, ein Hilfsgerät (48a, 48b, 48c, 48d, 48e) anzutreiben, wobei sich das Zahnradgetriebe (42) entlang eines Winkelsektors erstreckt und die Ausgänge (46a, 46b, 46c, 46d, 46e) um die Achse (X) des Turbotriebwerks winkelmäßig voneinander entlang des Winkelsektors beabstandet sind.

2. Turbotriebwerk nach Anspruch 1,
**dadurch gekennzeichnet, dass**
es Mittel zur Befestigung des Zahnradgetriebes (42) an einem Gehäuse des Turbotriebwerks enthält, die in der Nähe der Umfangsenden des Zahnradgetriebes angeordnet sind.

3. Turbotriebwerk nach Anspruch 1 oder 2,
**dadurch gekennzeichnet, dass**
das zumindest eine Kegelritzel (36) auf der Welle zwischen einem Ende, das mit dem Eingang des Zahnradgetriebes (42) verbunden ist, und einem gegenüberliegenden Ende, das Mittel zur Drehverbindung mit der Kraftübertragungswelle trägt, angeordnet ist.

4. Turbotriebwerk nach Anspruch 3,
**dadurch gekennzeichnet, dass**
die Ausgänge des Antriebsgehäuses (42) sich axial und ausgehend von einer Fläche des Antriebsgehäuses (42), die der Fläche gegenüberliegt, die dem zumindest einen Kegelritzel (36) zugewandt ist, erstrecken.

5. Turbotriebwerk nach einem der Ansprüche 1 bis 4,
**dadurch gekennzeichnet, dass**
das Zahnradgetriebe (42) sich in Umfangsrichtung über einen Winkelabstand zwischen 45° und 180°, vorzugsweise etwa 150°, erstreckt.

6. Turbotriebwerk nach einem der vorangehenden Ansprüche,
**dadurch gekennzeichnet, dass**
das zumindest eine Kegelritzel (36) mit zumindest zwei Hilfsgeräten (69) verbunden ist, die in Bezug auf eine Ebene, die die Achse der Hauptwelle (34) enthält, symmetrisch zueinander angeordnet sind.

7. Turbotriebwerk nach Anspruch 6,
**dadurch gekennzeichnet, dass**
die Hilfsgeräte elektrische Generatoren (69) sind.

8. Turbotriebwerk nach einem der vorangehenden Ansprüche,
**dadurch gekennzeichnet, dass**
es ein einziges Kegelritzel (36) enthält.

9. Turbotriebwerk nach einem der Ansprüche 1 bis 8,
**dadurch gekennzeichnet, dass**
das Antriebsgehäuse (32) radial in einem ringförmigen Raum, der einen ringförmigen Primärluftstrom von einem ringförmigen Sekundärluftstrom trennt, und axial im Bereich des Hochdruckverdichters angeordnet ist, wobei das Gehäuse so angeordnet ist, dass der Getriebeblock stromabwärts von dem zumindest einen Kegelritzel (36) angeordnet ist.

## Claims

1. A turbomachine comprising a drive gearbox (32) for pieces of equipment comprising a main shaft (34) rotationally connected to a power transmission shaft of the turbomachine, with the main shaft (34) comprising at least one bevel gear (36) rotationally driving at least one piece of equipment (69), **characterized in that** it comprises a gear set (42) with cylindrical gearwheels (44a, 44b, 44c, 44d, 44e) comprising an input connected to the rotational drive to the main shaft (34) and comprising a plurality of outputs (46), each intended to drive one piece of equipment (48a, 48b, 48c, 48d, 48e), with the gear set (42) extending over an angular sector and the outputs (46a, 46b, 46c, 46d, 46e) being angularly spaced apart about the axis (X) of the turbomachine, along the angular sector.

2. A turbomachine according to claim 1, **characterized in that** it comprises means for anchoring the gear set (42) to a casing of the turbomachine, arranged close to the peripheral ends of the gear set.

3. A turbomachine according to claim 1 or 2, **characterized in that** said at least one bevel gear (36) is arranged on the shaft between one end connected to the input of the gear set (42) and one opposite end carrying means for rotational connection to the power transmission shaft.

4. A turbomachine according to claim 3, **characterized in that** the outputs of the gearbox (42) extend axially and from a face of the gearbox (42) opposite the one facing the at least one bevel gear (36).

5. A turbomachine according to one of claims 1 to 4, **characterized in that** it the gear set (42) extends on the periphery over an angular distance ranging from 45° to 180°, preferably over about 150°.

6. A turbomachine according to one of the preceding claims, **characterized in that** said at least one bevel gear (36) is connected to at least two pieces of equipment (69), arranged symmetrically relative to each other relative to a plane containing the axis of the main shaft (34).

7. A turbomachine according to claim 6, **characterized in that** said pieces of equipment are electric generators (69).

8. A turbomachine according to one of the preceding claims, **characterized in that** it comprises only one bevel gear (36).

9. A turbomachine according to one of claims 1 to 8, **characterized in that** the drive gearbox (32) is radially arranged in an annular space separating a primary annular air jet and a secondary annular air jet, and axially at the high pressure compressor, with the box being so arranged that the gear unit is arranged downstream of said at least one bevel gear (36).
